# EUROPÄISCHE PATENTSCHRIFT

(11) **EP 0 823 440 B1**
(45) Veröffentlichungstag und Bekanntmachung des Hinweises auf die Patenterteilung: **16.10.2002**
(21) Anmeldenummer: 97112619.8
(22) Anmeldetag: 23.07.1997
(51) Int. Cl.: C08F 8/00, C08F 20/00, C08F 6/00

(54) **Verfahren zur Herstellung von Polyacrylaten mit geringem Acrylat-Restmonomer-Anteil**
Process for the manufacture of polyacrylates having reduced content of residual monomer
Procédé de préparation de polyacrylates à teneur réduite en monomère résiduel

(30) Priorität: 05.08.1996 DE 19631585
(43) Veröffentlichungstag der Anmeldung: 11.02.1998
(73) Patentinhaber: BAYER AG, 51368 Leverkusen (DE)
(72) Erfinder: Margotte, Dieter, Dr., 47807 Krefeld (DE); Wamprecht, Christian, Dr., 41472 Neuss (DE); Pedain, Josef, Dr., 51061 Köln (DE); Höcker, Hartwig, Prof. Dr., 52076 Aachen (DE); Rohde, Volker, 52066 Aachen (DE)

(56) Entgegenhaltungen:
- EP-A- 0 034 204
- EP-A- 0 574 248
- EP-A- 0 630 923
- DD-A- 150 212
- US-A- 4 476 262

## Beschreibung

Die Erfindung betrifft ein Verfahren zur Herstellung von Polyacrylaten mit geringem Restmonomer-Anteil.

Die radikalische Polymerisation von α,β-ungesättigten Monomeren und anderen zur radikalischen Polymerisation befähigten Monomeren ist seit langem bekannt.

Die in den letzten Jahren bekanntgewordenen Anmeldungen beziehen sich meist auf besondere Herstellverfahren oder spezielle Monomerzusammensetzungen, um bestimmt Eigenschaften zu erzielen. So werden z.B. in der EP-A 528 304 und der EP-A 625 529 Polymerisationsverfahren zur Herstellung von Polyacrylaten beschrieben, die sich durch eine deutlich verbesserte physikalische Trocknung auszeichnen.

Eine Vielzahl von Patentanmeldungen beschreibt die Herstellung von Polyacrylaten mit funktionellen Gruppen. In der EP-A 630 923 werden z.B. OH-haltige Polyacrylate beschrieben, die mit Polyisocyanaten kombiniert werden können und zu vemtzten Filmen führen.

Bei der radikalischen Polymerisation von Acrylat-Monomeren mit Peroxidinitiatoren in Lösung ist es nicht zu vermeiden, daß ein gewisser Teil der Acrylat-Monomere nicht polymerisiert und in der Reaktionslösung zurückbleibt. Der resultierende Rest-Monomergehalt schwankt zwischen 0,5 und 2 Gew.-%.

Durch verschärfte Umweltauflagen wird nun mehr und mehr gefordert, daß monomerarme Polyacrylate angeboten werden, aus denen 2K-PUR-Lacke hergestellt werden können, deren Filme nach Aushärtung keine Stoffe mehr an die Umwelt abgeben, die entweder giftig sind oder für die Umwelt eine Belastung bedeuten.

Die Aufgabe der Erfindung lag nun darin, ein Verfahren zur Herstellung von Polyacrylaten zu entwickeln, welches es gestattet, den Acrylat-Restmonomer-Anteil auf z.B. <0,1 % abzusenken.

In der DD-A 150 212 werden Acrylat-Maleinsäureanhydrid-Copolymerisate zur Verwendung bei der Filmproduktion beschrieben, deren Rest-Maleinsäureanteil durch z.B. Vinylether oder Styrol deutlich reduziert wird. In der DD-A 264 004 wird durch Zugabe von Vinylester org. Carbonsäure, wie z.B. Vinylacetat oder Vinylbutyrat, ebenfalls der Restmonomergehalt in Styrol/Acrylnitril-Copolymerisaten und Pfropfcopolymerisaten auf einen Butadien-Kautschuk deutlich reduziert.

Nachteilig für beide Verfahren ist, daß nach der nachträglichen Behandlung anstelle der Ausgangsmonomeren jetzt die Monomeren in der Polyacrylat-Lösung enthalten sind, die zur Reduzierung der Ausgangsmonomere eingesetzt wurden (Vinylether und Vinylacetat). Diese werden aufgrund ihres Dampfdruckes während des Gebrauchs wieder an die Umgebung abgegeben.

Stand der Technik ist es, den Polymerisationsansatz nach beendeten Polymerisation mit Peroxid nachzuaktivieren und dann noch einige Zeit bei der Polymerisationstemperatur zu halten.

Der Monomergehalt kann auch reduziert werden, wenn die Polymerlösung nach Fertigstellung des Polyacrylats andestilliert wird.

Nach beiden Verfahren, die Stand der Technik sind, werden die Restmonomergehalte nur auf ca. 0,4 Gew.-% abgesenkt.

Überraschend wurde nun gefunden, daß der Rest Monomergehalt auf <0,1 Gew.-% abgesenkt werden kann, wenn man die Reaktionslösung am Ende der Polymerisation mit 0,5 bis 3 Gew.-% Maleinsäureanhydrid und 0,5 bis 3 Gew.-% des verwendeten Peroxids versetzt und 1 bis 2 Stunden nachpolymerisiert.

Gegenstand der vorliegenden Erfindung ist ein Verfahren zur Herstellung von Polyacrylat-Lösungen, deren Rest-Acrylat-Monomer-Anteil nach der Polymerisation bei <0,1 Gew.-% liegt, dadurch gekennzeichnet, daß man Monomere mit geringem Dampfdruck für die Nachpolymerisation einsetzt.

Besonders bevorzugtes Monomeres ist Maleinsäureanhydrid.

Produkte gemäß der vorliegenden Erfindung geben auch nach der Aushärtung mit Polyisocyanaten keine belästigenden bzw. schädigenden Stoffe mehr an die Umwelt ab.

Die Polyacrylate gemäß der vorliegenden Erfindung sind auf Basis folgender Monomere aufgebaut.
0 bis 50, vorzugsweise 2,5 bis 40 Gew.-%, aus den Monomeren A),
30 bis 90, vorzugsweise 405 bis 80 Gew.-%, aus den Monomeren B),
0 bis 50, vorzugsweise 0 bis 30 Gew.-%, aus den Monomeren C),
0 bis 5, vorzugsweise 0 bis 3 Gew.-%, aus den Monomeren D) und
0 bis 50, vorzugsweise 0 bis 30 Gew.-%, aus den Monomeren E).

Bei den Monomeren der Gruppe A) handelt es sich um Hydroxylgruppen-tragende Monomere, insbesondere um Hydroxyalkylester α,β-ungesättigter Carbonsäuren, insbesondere von Acrylsäure oder Methacrylsäure mit 2 bis 12, vorzugsweise 2 bis 6 Kohlenstoffatomen im Hydroxyalkylrest. Beispielhaft genannt seien 2-Hydroxyethylacrylat, die isomeren, insbesondere durch Anlagerung von Propylenoxid an Acrylsäure erhaltenen Hydroxypropylacrylate, die isomeren Hydroxybutylacrylate, Hydroxypentylacrylate und/oder Hydroxyhexylacrylate und/oder die diesen Acrylaten entsprechenden Methacrylate. Vorzugsweise handelt es sich bei den Monomeren A) um 2-Hydroxyethyl(meth)acrylat und/oder die isomeren Hydroxypropyl(meth)acrylate. Aus der beispielhaften Aufstellung geht hervor, daß die Hydroxylgruppen-aufweisenden Hydroxylalkylester sowohl primäre als auch sekundäre Hydroxylgruppen aufweisen können. Die Monomeren A) werden im Rahmen der oben genannten Bereiche im übrigen in solchen Mengen eingesetzt, daß die resultierenden Acrylatharzen, bezogen auf Festharz, einen Hydroxylgruppengehalt von 0 bis 7,3, vorzugsweise 0,3 bis 5,8 Gew.-% aufweisen.

Als Monomer B) wird Methylmethacrylat verwendet.

Als gegebenenfalls mitzuverwendendes Monomer C) wird Styrol eingesetzt.

Als gegebenenfalls mitzuverwendende Monomere D) werden olefinisch ungesättigte Carbonsäuren, wie insbesondere Acryl- oder Methacrylsäure oder aber auch Itaconsäure, Crotonsäure und/oder Halbester der Malein- oder Fumarsäure eingesetzt.

Bei den gegebenenfalls mitzuverwendenden Monomeren E) handelt es sich um beliebige sonstige olefinisch ungesättigte Monomere, die von den Monomeren der Gruppen A) bis D) verschieden sind. In diesem Zusammenhang sind insbesondere Acryl- und/oder Methacrylsäure-alkylester und/oder -cycloalkylester mit 1 bis 18, vorzugsweise 1 bis 10 Kohlenstoffatomen im Alkyl- bzw. Cycloalkylrest wie beispielsweise die Methyl-, Ethyl-, n-Propyl-, n-Butyl-, Isopropyl-, Isobutyl-, t-Butyl, die isomeren Pentyl-, Hexyl-, Octyl-, Dodecyl-, Hexadecyl-, Octadecyl-, 3,5,5-Trimethylcyclohexyl-, Isobornyl- und/oder Cyclohexylester der genannten Säuren mit Ausnahme von Methylmethacrylat oder aber auch Monomere wie beispielsweise Acrylnitril, Ethyl-vinylether, ethacrylnitril, Vinylacetat, Vinylchlorid, Vinyltoluol oder auch anhydridfunktionelle, ungesättigte Monomere wie Itaconsäureanhydrid oder Maleinsäureanhydrid oder beliebige Gemische derartiger Monomerer zu nennen.

Die Copolymerisationsreaktion erfolgt vorzugsweise in organischer Lösung, wobei die üblichen, inerten Lösungsmittel in Betracht kommen. Beispielhaft genannt seien Toluol, Xylol, n-Butylacetat, Ethylacetat, Ethylglykolacetat, die isomeren Pentylacetate, Hexylacetate, Methoxypropylacetate, Tetrahydrofuran, Dioxan, Aceton, Methylethylketon, Methylisobutylketon, höhersiedende Aromatengemische, wie z.B. Solvent-Naphtha®, Schwerbenzol, verschiedene Solvesso®-Typen, verschiedene Shellsol®-Typen sowie höhersiedende, aliphatische und cycloaliphatische Kohlenwasserstoffe, wie z.B. verschiedene Testbenzine, Mineralterpentinöl, Isopar®-Typen, Nappar®-Typen, Tetralin und Dekalin sowie Gemische derartiger Lösungsmittel.

Bevorzugt eingesetzte Lösemittel sind n-Butylacetat, Methoxypropylacetat und Xylol, sowie Gemische dieser Lösungsmittel. Die Lösungsmittel werden bei der Durchführung der Copolymerisationsreaktion im allgemeinen in Mengen von 30 bis 70 Gew.-%, bezogen auf das Gesamtgewicht des Reaktionsansatzes eingesetzt.

Im allgemeinen liegt die Polymerisationstemperatur, je nach eingesetztem Peroxid, zwischen 90 und 200°C, vorzugsweise zwischen 100 und 160°C.

Geeignete Initiatoren sind solche, die in den angegebenen Temperaturbereichen eine Halbwertzeit zwischen 0,5 Minuten und 2 Stunden haben. Dies sind z.B. Dilaurylperoxid, tert.-Butylperoxy-2-ethylhexanoat, tert-Butylperoxydiethylacetat, Dibenzoylperoxid, tert.-Butylperoxyisobutyrat, 1,1-Di-tert.-butylperoxy-3,3,5-trimethylcyclohexan, 1,1-Di-tert.-butylperoxycyclohexan, tert.-Butylperoxy-3,3,5-trimethylhexanoat, tert.-Butylperoxyisopropylcarbonat, Di-tert.-butylperoxid, 2,2-Di-tert.-butylperoxybutan, tert.-Butylperoxystearylcarbonat.

Die Initiatoren werden im allgemeinen in einer Menge von 0,5 bis 5, vorzugsweise 1 bis 4 Gew.-%, bezogen auf das Gewicht der Monomeren A) bis E) eingesetzt. Die Angabe bezieht sich auf lösungsmittelfreie Initiatoren einerseits und lösungsmittelfreie Monomere andererseits.

Besonders bevorzugt erfolgt die Herstellung der Polyacrylatharze unter Verwendung von n-Butylacetat als Lösungsmittel und von tert.-Butylperoxy-2-ethylhexanoat als Initiator bei Temperaturen von 100 bis 130°C und Di-tert.-butylperoxid bei Temperaturen von 130 bis 200°C.

Die so hergestellten Polyacrylate enthalten einen Restmonomergehalt von ca. 0,5 bis 3 Gew.-%.

Es wurde nun überraschend gefunden, daß der Restmonomeranteil durch eine nachträgliche radikalische Polymerisation in Gegenwart von 0,5 bis 3 gew%, vorzugsweise 1 bis 2 Gew.-% Maleinsäureanhydrid und 0,5 bis 3 gew%, vorzugsweise 1 bis 2 Gew.-% Peroxid auf <0,1 Gew.-% reduziert werden kann.

Nach beendeter radikalischer Polymerisation wird direkt die Nachpolymerisation in Gegenwart von Maleinsäureanhydrid durchgeführt.

Die nach dem erfindungsgemäßen Verfahren hergestellten Polyacrylate können z.B. für technisch nicht hochwertige Anwendungen ohne zusätzliche Vernetzungsmittel (Polyisocyanate) eingesetzt werden. Vorzugsweise werden für derartige Anwendungen OH-Gruppen-freie Polyacrylate eingesetzt.

Für technische Anwendungen mit hohen Anforderungen an z.B. Lösemittel- und Chemikalienbeständigkeit werden OH-funktionelle Polyacrylate eingesetzt, die mit den bekannten Lackpolyisocyanaten vernetzt werden. Das heißt insbesondere Biuret-, Urethan-, Allophanat-, Uretdion und/oder Isocyanuratgruppen aufweisende Polyisocyanate einer über 2, vorzugsweise zwischen 2,5 und 6 liegenden mittleren NCO-Funktionalität. Diese Polyisocyanate weisen vorzugsweise aromatisch, cycloaliphatisch und/oder aliphatisch gebundene Isocyanatgruppen auf. Für lichtechte Beschichtungen werden Polyisocyanate mit aliphatisch und/oder cycloaliphatisch gebundenen Isocyanatgruppen bevorzugt. Die erfindungsgemäß einzusetzenden Lackpolyisocyanate werden durch an sich bekannte Modifizierung von einfachen organischen Diisocyanaten unter Biuret-, Urethan-, Allophanat-, Uretdionund/oder Isocyanuratbildung hergestellt, wobei jeweils nach der Modifizierungsreaktion evtl. noch vorliegende Überschüsse an nicht-modifiziertem monomerem Ausgangsisocyanat in an sich bekannter Weise, vorzugsweise durch Destillation, so weit entfernt werden, daß in den erfindungsgemäß einzusetzenden Lackpolyisocyanaten höchstens 0,7, vorzugsweise höchstens 0,5 Gew.-%, an monomerem Diisocyanat vorliegen. Die einzusetzenden Lackpolyisocyanate weisen im allgemeinen einen NCO-Gehalt, bezogen auf Feststoff, im Bereich von 10 bis 30 Gew.-%, vorzugsweise 15 bis 25 Gew.-% auf.

Eingesetzt werden die 2K-PUR-Systeme z.B. in der Autoreparatur- und Großfahrzeuglackierung, allgemeinen Industrielackierungen, bevorzugt in der industriellen Holz- und Möbellackierung.

### Beispiele

### Polyacrylat A

Hergestellt durch Polymerisation von Methylmethacrylat (MMA), 2-Ethylhexylacrylat (2-EHA) und Hydroxyethylmethacrylat (HEMA) als 40-%ige Lösung in Butylacetat. Als Initiator wurde ter.-Butylperoxy-2-ethylhexanoat eingesetzt. Die Polymerisationstemperatur betrug 110°C. Der Festkörper lag nach der Polymerisation bei 39,6 %, die Lösungsviskosität bei 2.450 mPa·s/23°C. Der OH-Gehalt, bez. auf die Lff., betrug 0,48 %.

### Polyacrylat B

Hergestellt durch Polymerisation von MMA, Butylacrylat (BA), 2-EHA und Hydroxypropylmethacrylat (HPMA) als 50-%ige Lösung in Butylacetat. Als Initiator wurde Di-tert.-butylperoxid eingesetzt. Die Polymerisationstemperatur betrug 150°C. Der Festkörpergehalt lag nach der Polymerisation bei 49,8 %, die Lösungsviskosität bei 4.120 mPa·s/23°C. Der OH-Gehalt, bezogen auf die Lff., betrug 1,0 %.

### Restmonomerbestimmung über Headspace/Gaschromatographie

Die Bestimmung der Restmonomeren erfolgte mit Hilfe der Headspaceanalyse. Bei diesem Verfahren werden die Proben mit einem hochsiedenden Lösemittel verdünnt und in eine dicht zu verschließende, über ein Septum zugängliche Ampulle gefüllt. Nach dem Verschließen wird die Probe auf 100°C erhitzt bis sich ein Gleichgewicht zwischen der flüssigen und gasförmigen Phase eingestellt hat. Aus dem Gasraum wird eine definierte Probenmenge in die Kapillarsäule eingespritzt.

Die Polyacrylate A und B wurden nach der beschriebenen Headspace/Gaschromatographiemethode bestimmt (Tabelle).

Charakterisierung der Ausgangspolyacrylate bezüglich Monomergehalt auf Lff. bezogen in %.

| | MMA | 2-EHA | Butylacrylat | HEMA | HPMA |
|---|---|---|---|---|---|
| Polyacrylat A % | 0,98 | 0,25 | - | <0,1 | - |
| Polyacrylat B % | 1,05 | 0,21 | 0,19 | - | <0,1 |

Nach Headspace/GC wurde ein Wert von ca. 1,2 bis 1,4 Gew.-% Rest-Acrylat-Monomer nach der Herstellung der Polyacrylate ermittelt.

### Erfindungsgemäße Beispiele 1 bis 6

1 000 g der Polyacrylate A oder B werden vorgelegt und nach Zugabe von Maleinsäureanhydrid und Peroxidlösung 2 Stunden erhitzt. Danach erfolgt die Restmonomerbestimmung nach Headspaceanalyse.

| Beispiel | 1 | 2 | 3 | 4 | 5 | 6 |
|---|---|---|---|---|---|---|
| Polyacrylat A, g | 1000 | 1000 | 1000 | - | - | - |
| Polyacrylat B, g | - | - | - | 1000 | 1000 | 1000 |
| Maleinsäureanhydrid, g | 10 | 20 | 5 | 10 | 20 | 5 |
| tert.-Butyl-peroxy-2-ethylhexanoat*, g | 10 | 20 | 15 | - | - | - |
| Di-tert.-butylperoxid, g | - | - | - | 5 | 10 | 7,5 |
| Reaktionstemperatur, °C | 110 | 110 | 110 | 150 | 150 | 150 |

| | | | | | | |
|---|---|---|---|---|---|---|
| * Eingesetzt als 50-%ige Lösung in Butylacetat. Der angegebene Wert bezieht sich auf die Peroxid-Lösung. | | | | | | |

### Restmonomer-Gehalte der Beispiele 1 bis 6 (Angaben in g)

| Beispiele | 1 | 2 | 3 | 4 | 5 | 6 |
|---|---|---|---|---|---|---|
| MMA, g | <0,1 | <0,1 | 0,16 | <0,1 | 0,1 | 0,12 |
| 2-EHA, g | <0,1 | <0,1 | <0,1 | <0,1 | <0,1 | <0,1 |
| BA, g | - | - | - | 0,12 | <0,1 | 0,11 |
| HEMA, g | <0,1 | <0,1 | <0,1 | - | - | - |
| HPMA, g | - | - | - | <0,1 | <0,1 | <0,1 |

Die anwendungstechnische Lackprüfung nach stöchiometrischer Vernetzung mit . einem Isocyanuratgruppen-aufweisenden Polyisocyanat auf Basis Hexamethylendiisocyanat, NCO-Gehalt 19,4 Gew.-% (Desmodur N 3390®) zeigt die gleichen technischen Eigenschaften wie die Ausgangspolymerisate A und B.

Die erfindungsgemäßen Polyacrylatharze weisen im allgemeinen ein mittels der Gelpermeationschromatographie bestimmtes mittleres Molekulargewicht Mn (Zahlenmittel) von vorzugsweise 1 000 bis 40 000, insbesondere 2 00 bis 30 000 auf. Die Gewichtsmittel liegen vorzugsweise zwischen 2 000 bis 80 000, insbesondere zwischen 4 000 und 60 000. Diese und alle nachstehenden Angaben bezüglich des Molekulargewichts des Polyacrylats beziehen sich auf die von Z. Grabisic, P. Rempp und H. Benoit, in J. Polymer Sc., Teil B, Polym. Lett. 5 (1967), S. 753 beschriebene Methode der Molakulargewichtsbestimmung.

## Patentansprüche

1. Verfahren zur Herstellung von Polyacrylat-Lösungen, deren Rest-Monomer-Anteil bei <0,1 Gew.-% liegt, **dadurch gekennzeichnet, daß** man 0,5 bis 3 Gew.-% Maleinsäureanhydrid und 0,5 bis 3 Gew.-% Peroxide für die Nachpolymerisation einsetzt.

2. Polyacrylate hergestellt durch eine radikalische Polymerisation in Lösung mit einem reduzierten Acrylat-Monomer-Anteil, **dadurch gekennzeichnet, daß** nach der radikalischen Copolymerisation von
A) 0 - 50 Gew.-% Hydroxyalkylestern der Acryl- und/oder Methacrylsäure,
B) 30 - 90 Gew.-% Methylmethacrylat,
C) 0 - 50 Gew.-% Styrol,
D) 0 - 5 Gew.-% olefinisch ungesättigten Carbonsäuren und
E) 0 - 50 Gew.-% von A) bis D) verschiedene olefinisch ungesättigte Monomere
0,5 bis 3 Gew.-% Maleinsäureanhydrid und 0,5 bis 3 Gew.-% Peroxid zugegeben werden und nachpolymerisiert wird.

3. Polyacrylat gemäß Anspruch 2, **dadurch gekennzeichnet, daß** Maleinsäureanhydrid in Mengen von 1 bis 3 Gew.-%, und Peroxid in Mengen von 1 bis 3 Gew.-% jeweils bezogen auf das Gewicht der Monomere eingesetzt wird und 1 bis 3 Stunden auf einer Temperatur von 90 bis 200°C gehalten wird.

4. Polyacrylate gemäß Anspruch 1, **dadurch gekennzeichnet, daß** als Peroxid tert.-Butyl-peroxy-2-ethylhexanoat bei 100 bis 130°C, eingesetzt wird.

5. Verwendung der Polyacrylate gemäß Anspruch 1 in 2K-PUR-Lacksystemen.

6. Verwendung der Polyacrylate gemäß Anspruch 1 und 5 für die industrielle Holz- und Möbellackierung.

7. Verwendung der Polyacrylate gemäß Anspruch 1 und 5 in der Autoreparaturund Großfahrzeuglackierung und Industrielackierung.

## Claims

1. A process for producing polyacrylate solutions, the residual monomer content of which is <0.1 % by weight, **characterised in that** 0.5 to 3 % by weight of maleic anhydride and 0.5 to 3 % by weight of peroxides are used for subsequent polymerisation.

2. Polyacrylates which are produced by radical-induced polymerisation in solution and which have a reduced content of acrylate monomers, **characterised in that** after the radical-induced copolymerisation of
A) 0 - 50 % by weight of hydroxyalkyl esters of acrylic and/or methacrylic acid,
B) 30 - 90 % by weight of methyl methacrylate,
C) 0 - 50 % by weight of styrene,
D) 0 - 5 % by weight of olefinically unsaturated carboxylic acids, and
E) 0 - 50 % by weight of olefinically unsaturated monomers which are different from A) to D),
0.5 to 3 % by weight of maleic anhydride and 0.5 to 3 % by weight of peroxide are added and subsequent polymerisation is effected.

3. A polyacrylate according to claim 2, **characterised in that** maleic anhydride is used in amounts of 1 to 3 % by weight, and peroxide is used in amounts of 1 to 3 % by weight, with respect to the weight of the monomers in each case, and the batch is held for 1 to 3 hours at a temperature of 90 to 200°C.

4. Polyacrylates according to claim 1, **characterised in that** tert.-butyl-peroxy-2-ethylhexanoate is used as the peroxide at 100 to 130°C.

5. Use of polyacrylates according to claim 1 in two-component PUR lacquer systems.

6. Use of polyacrylates according to claims 1 and 5 for the industrial lacquer coating of wood and furniture.

7. Use of polyacrylates according to claims 1 and 5 for the lacquer coating of automobiles for repair purposes, for the lacquer coating of large vehicles, and for industrial lacquer coating.

## Revendications

1. Procédé de préparation de solutions de polyacrylate, dont la teneur en monomère résiduel se situe à < 0,1% en poids, **caractérisé en ce que** l'on met en oeuvre 0,5 à 3% en poids d'anhydride maléique et 0,5 à 3% en poids de peroxyde pour la polymérisation ultérieure.

2. Polyacrylates préparés par polymérisation radicalaire en solution avec une teneur en monomère acrylate résiduel réduite, **caractérisés en ce que** l'on ajoute après la copolymérisation radicalaire de
A) 0-50% en poids d'esters d'hydroxyalcoyle d'acide acrylique et/ou méthacrylique ;
B) 30-90% en poids de méthacrylate de méthyle ;
C) 0-50% en poids de styrène ;
D) 0-5% en poids d'acides carboxyliques oléfiniquement insaturés, et
E) 0-50% en poids de monomères oléfiniquement insaturés, différents de A) à D),
0,5 à 3% en poids d'anhydride maléique et 0,5 à 3% en poids de peroxyde et on polymérise de manière ultérieure.

3. Polyacrylate suivant la revendication 2, **caractérisé en ce que** l'anhydride maléique est mis en oeuvre en une quantité allant de 1 à 3% en poids et le peroxyde en une quantité allant de 1 à 3% en poids, chaque fois sur base du poids des monomères, et on maintient à une température allant de 90 à 200°C pendant 1 à 3 heures.

4. Polyacrylate suivant la revendication 2, **caractérisé en ce que** l'on met en oeuvre comme peroxyde, le peroxy-2-éthylhexanoate de t-butyle de 100 à 130°C.

5. Utilisation des polyacrylates suivant la revendication 2, dans des systèmes de laque PUR-2C.

6. Utilisation des polyacrylates suivant les revendications 1 et 5, pour le vernissage industriel du bois et de meubles.

7. Utilisation des polyacrylates suivant les revendications 1 et 5, pour la peinture de réparation des voitures, la peinture des gros véhicules et la peinture industrielle.
